Europäisches Patentamt

European Patent Office

Office européen des brevets

(11) Publication number: **0 130 216 B1**

# EUROPEAN PATENT SPECIFICATION
## published in accordance with Art. 158(3) EPC

(45) Date of publication of patent specification: **08.05.91**

(51) Int. Cl.5: **G02F 1/015**, G02F 1/19, G02F 1/35

(21) Application number: **84900572.3**

(22) Date of filing: **23.12.83**

(86) International application number:
**PCT/US83/02024**

(87) International publication number:
**WO 84/02782 (19.07.84 84/17)**

(54) **A LIGHT BEAM APPLIED TO A LAYERED SEMICONDUCTOR STRUCTURE IS CONTROLLED BY ANOTHER LIGHT BEAM.**

(30) Priority: **03.01.83 US 455462**

(43) Date of publication of application:
**09.01.85 Bulletin 85/02**

(45) Publication of the grant of the patent:
**08.05.91 Bulletin 91/19**

(84) Designated Contracting States:
**DE FR GB NL**

(56) References cited:
**US-A- 3 295 911**
**US-A- 4 190 811**

(73) Proprietor: **Western Electric Company, Incorporated**
**222 Broadway**
**New York, NY 10038(US)**

(72) Inventor: **CHEMLA, Daniel, Simon**
**1 Waterman Avenue**
**Rumson, NJ 07760(US)**

(74) Representative: **Watts, Christopher Malcolm Kelway et al**
**AT&T (UK) LTD. AT&T Intellectual Property Division 5 Mornington Road**
**Woodford Green Essex IG8 OTU(GB)**

Rank Xerox (UK) Business Services

APPLIED PHYSICS LETTERS, vol. 23, no. 10, 15th November 1973, pages 571-573, American Institute of Physics, New York, US; J.H. McFEE et al.: "Beam deflection and amplitude modulation of 10.6-mum guided waves by free-carrier injection in GaAs-AlGaAs heterostructures"

N, APPL. PHYS. LETT., VOL 40 No. 3, Published 01 Feb. 1982, PP. 205-207, TARNG ET AL, "EXTERNAL OFF AND ON SWITCHING OF A BISTABLE OPTICAL DEVICE"

N, APPL. PHYS. LETT. VOL 26 No. 8, Published 15 April 1975, pp. 463-465, VAN DER-ZIEL et al, "LASER OSCILLATION FROM QUANTUM STATES IN VERY THIN GaAs-ALo.2Gao.8As Multilayer structures"

## Description

### Background of the Invention

The invention relates to nonlinear optical devices which may be described more particularly as nonlinear optical devices using a layered semiconductor structure for controlling one light beam by another light beam.

US-A-4190811 discloses apparatus for switching an infra-red laser beam by means of another laser beam. The plane-polarized infra-red beam is incident on the surface of a semiconductor body at Brewster's angle, so that it passes through the body with substantially no reflection. A highly intense control beam of short duration from a ruby laser is directed at the surface of the body to excite free carriers having a density which is greater than or equal to the density at which the plasma frequency is equal to the frequency of the infra-red light, thus producing substantially total reflection.

J.H. McFee et al (Appl. Phys. Letts., vol. 23, No.10, 15 November 1973, pages 571-573) discloses a device as set out in the preamble of claim 1. A 10μm thick GaAs film is formed on a GaAlAs under-layer, which is supported by a GaAs seed crystal. An infra-red input beam is introduced into the GaAs film, which acts as a waveguide layer. An ultra-violet control beam is applied to the GaAs film to introduce free carriers into a 1μm surface region, thus locally reducing the refractive index and deflecting the beam. The control beam is provided by a powerful $N_2$ laser. As a more practical device the authors suggest electrical injection of carriers.

### Summary of the Invention

In the invention as set out in claim 1 a multiple quantum well structure is used for the non-linear region.

### Brief Description of the Drawings

A better understanding of the invention may be derived from the detailed description following if that description is read with reference to the attached drawings wherein

FIG. 1 is a schematic diagram of an optical device embodying the invention;

FIGS. 2, 3 and 4 are a group of operating characteristic curves for the device of FIG. 1;

FIG. 5 is a schematic diagram of another optical device embodying the invention;

FIG. 6 is a perspective schematic diagram of still another optical device embodying the invention;

FIG. 7 is an intensity distribution curve for a control light beam used in the arrangement of FIG. 6;

FIG. 8 is a top view of a device similar to the arrangement of FIG. 6;

FIGS. 9, 10 and 11 are a group of operating characteristic curves for the device of FIG. 8;

FIG. 12 is a top view of another device similar to the arrangement of FIG. 6; and

FIGS. 13, 14 and 15 are a group of operating characteristic curves for the device of FIG. 12.

### Detailed Description

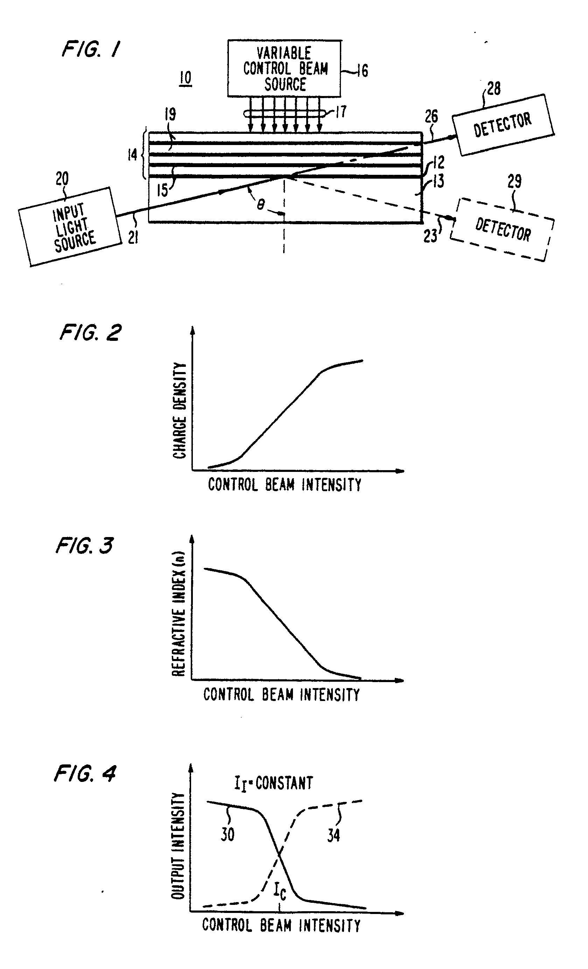

Referring now to FIG. 1, an optical device 10 is a nonlinear switching arrangement including an optical interface 12 between a linear optical material 13 and a nonlinear optical material 14. The linear optical material 13 is a solid substrate material, such as a semiconductor material. $Ga_{1-x}Al_xAs$ is an alloy system from which a linear optical material can be selected. The linear optical material 13 has an index of refraction $n_0$. The nonlinear optical material 14 is a multiple quantum well structure containing alternate layers of a small energy band gap material 15 and a large energy band gap material 19. The layers of materials are lattice matched with the substrate and with each other. One type of multiple quantum well structure includes multilayer films of single crystal GaAs and $Ga_{1-x}Al_xAs$. The nonlinear optical material has an intensity dependent refractive index $n = n_1 + n_2I$ that produces an optical Kerr effect. In this expression, I is the intensity of light applied to the medium, $n_1$ is the zero-intensity refractive index, and $n_2$ is the optical Kerr coefficient. With this system of materials, the device 10 operates effectively in a wavelength larger than 0.85 micrometers. The refractive index $n_0$ of the linear optical material is slightly smaller than the zero-intensity refractive index $n_1$ of the nonlinear optical material. The optical Kerr coefficient $n_2$ has a negative sign.

The structure is designed for trapping a predetermined quantity of charge in the material of layers 15. The layers 15 are intrinsic semiconductor layers, such as GaAs, having a small energy band gap. A control beam source 16 applies to the device 10 a control light beam 17 having a variable intensity I. A diode laser driven by a variable current source or a laser with a variable neutral filter will provide a suitable control beam source. The control light beam has a wavelength within the absorption range of the nonlinear optical material. Absorbed light photoexcites carriers within the layers 15 and thereby releases charge from valence bands in the small energy band gap material of those layers. A predetermined quantity of charge is released and trapped in the layers 15 while the device is energized by the control light beam 17. A wave function of the trapped charge in the layers 15 is an oscillating sine waveform. An intrinsic semiconductor, such as $Ga_{l-x}Al_xAs$, is formed into the large energy band gap material layers 19 which are thick enought so that the trapped charge in any layer 15 is isolated from the charge in every other layer 15. Any trapped charge which spreads into the layers 19, decreases exponentially therein. The trapped charge penetrates into the layers 19 on the order of ten to twenty angstroms. With the layers 19 five to ten times thicker than the penetration of the trapped charge, each layer 15 operates as an independent square well.

In FIG. 1 an input light source 20 of monochromatic light produces a light beam 21 that is applied to the layers of the optical device 10. The wavelength of the input light beam is in the transparency range of the nonlinear optical material. This input light beam is directed through the linear optical material 13 to the optical interface 12 between the linear optical material 13 and the nonlinear optical material 14. The input light beam 21 is directed along an axis which is positioned at an angle of incidence $\theta$ that is greater than the critical angle of incidence for high intensity values of the control light beam. The source 20 produces the input light beam 21 with a constant intensity $I_i$. The control beam source 16 produces the control light beam 17 which is directed into the layered structure where it is absorbed for creating charge in the layers 15. As long as the beam 17 is applied, the charge is trapped in the layers 15.

FIG. 2 shows a plot of the charge density in the layers 15 in response to the intensity of the control light beam 17 of FIG. 1. Intensity of the control light, or charge energizing, beam 17 is selected so that the refractive index $n_0$ of the linear optical material 13 is slightly less than the refractive index $n = n_1 + n_2I$ of the nonlinear layered material for low intensities of the control light beam and slightly more than the refractive index $\overline{n}$ for high intensities of the control light beam.

As shown in FIGS. 2 and 3, charge density increases and the nonlinear refractive index $n = n_1 + n_2I$ of the layered material decreases in dependence upon the intensity of the control light beam.

The reflectivity of the interface 12 is dependent upon the intensity I of the control light beam 17. For intensities below a critical intensity $I_c$ of the control light beam 17, the input light beam 21 is transmitted through the interface 12 and the layered nonlinear optical material 14 to an optical detector 28 as an output beam 26.

As the intensity of the control light beam 17 is increased, the refractive index $\overline{n}$ of the multiple quantum well structure decreases. This causes a positive feedback effect in which an increase of the control beam intensity reduces the effective critical angle. At the critical control beam intensity $I_c$, the refractive index $\overline{n}$ of the nonlinear optical material 14 equals the refractive index $n_0$ of the linear optical material 13. The nearly total transmission of the input beam through the interface 12 and the nonlinear optical material 14 switches to nearly total internal reflection. For control beam intensities greater than the critical intensity $I_c$, the input beam 21 is totally internally reflected at the optical interface 12. The reflected output beam 23 is transmitted through the linear optical material 13 away from the detector 28.

Referring now to FIG. 4, there is shown an operating characteristic for the device 10 in accordance with the foregoing description wherein the intensity $I_i$ of the input light beam is constant. The detector 28 of FIG. 1 determines whether the intensity of the control light beam is above or below the critical intensity $I_c$. As shown by the solid curve 30 in FIG. 4, control beam intensities below the critical intensity $I_c$ causes the detector 28 to receive a high intensity of light in the output beam 26 of FIG. 1. When the control beam intensity is approximately equal to the critical intensity $I_c$, the output beam applied to the detector has a rapidly falling intensity in FIG. 4. For control beam intensities above the critical intensity $I_c$, the output beam 26 applied to the detector 28 of FIG. 1 has a low intensity in FIG. 4.

The dotted curve 34 in FIG. 4 represents the operating characteristic of the arrangement of FIG. 1 when the detector is positioned in an alternative position shown by a dotted detector 29.

As a result of the change of the refractive index $\overline{n}$ with the intensity of the control light beam, the optical device 10 of FIG. 1 either transmits the input beam through the layered nonlinear material to the detector 28 or else nearly totally reflects the input beam away from detector 28. Thus control of the input light beam at the interface 12 between the linear optical material and the layered nonlinear optical material is dependent upon the intensity of the control light beam.

Because the operative phenomenon is a dynamic movement of the trapped charge in response to changes of intensity of the control light beam, the rate of turn-on response of the device 10 is as rapid as the changes of intensity of the light beam 17. The rate of the turn-off response of the device 10 is related to the recombination time of the charge. Thus the speed of operation potentially is high.

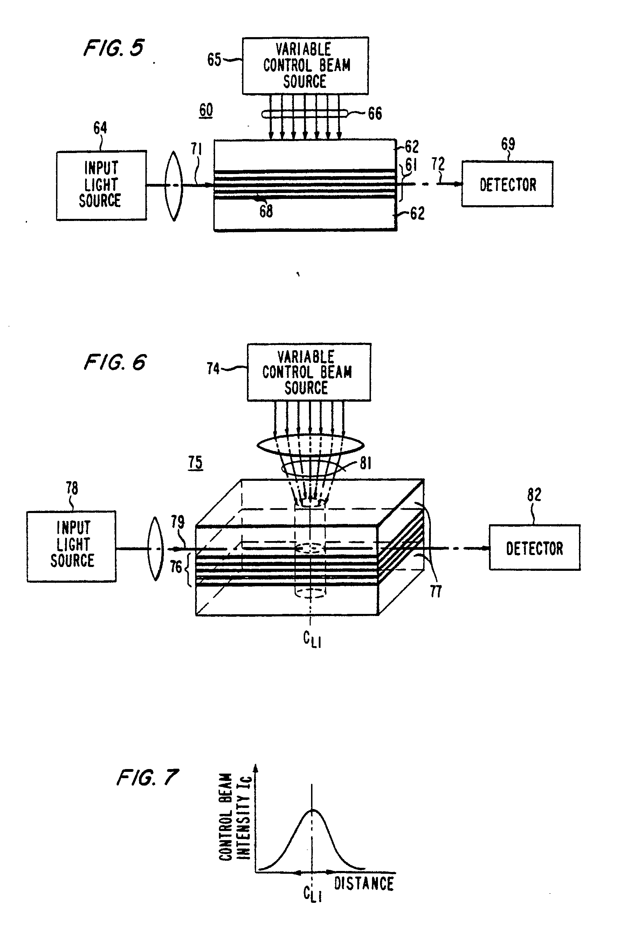

Referring now to FIG. 5, there is shown another optical device 60 embodying the invention. A layered nonlinear optical material 61, having a multiple quantum well structure, forms an optical waveguide arrangement with a linear optical material 62. No charge is doped into the low energy band gap material of the layers 68 of the nonlinear optical material 61. A control beam source 65 produces a control light beam 66 which is directed into the layered structure where it is absorbed for releasing charge in the layers 68. As long as the control light beam 66 is applied, some of the released charge is trapped in the layers 68. The charge density in the layers 68 is varied in response to the intensity of the control light beam 66. For a low intensity of the control light beam 66, the refractive index $n_0$ of the linear material 62 is slightly less than the refractive index $n = n_1 + n_2 I$ of the nonlinear layered material 61. As the intensity of the control light beam is increased, the charge density increases and the nonlinear refractive index $n = n_1 + n_2 I$ of the layered material decreases in dependence upon the intensity of the control light beam.

An input light source 64 produces a monochromatic input light beam 71 which is applied to the layered nonlinear optical material along an axis which is parallel to the layers of the nonlinear material. The wavelength of the input light beam is in the transparency range of the nonlinear optical material. For low intensities of the control light beam 66, the input beam 71 is guided through the layered nonlinear optical material 61 to a detector 69. As the intensity of the control light beam 66 is varied from the low value to a high value, the refractive index $n$ of the layered material changes as a result of the optical Kerr effect. At a critical intensity $I_c$ of the control light beam, the refractive index $n_0$ of the linear material 62 equals the refractive index $n$ of the nonlinear material 61. For high intensities of the control light beam, the input beam 71 is not guided. Thus the input beam 71 spreads into the linear optical material reducing the intensity of light incident upon the detector 69.

The operating characteristic curve 30 of FIG. 4 also represents operation of the device of FIG. 5. The input light beam is either guided through the nonlinear optical material 61 to the detector 69 or spread through the linear optical material 62. Guiding the input light beam 71 to the detector in response to a low intensity control beam 66 causes a high intensity output beam 72 to be applied to the detector 69. Spreading the input light beam 71 through the linear optical material in response to a high intensity control beam 66 causes the output beam 72 to be a low intensity.

Referring now to FIG. 6, there is shown an optical device 75 which includes a layered nonlinear optical material 76 sandwiched between layers of linear optical material 77. The nonlinear optical material is a multiple quantum well structure, as previously described.

A light source 78 applies an input light beam 79 of monochromatic light to an edge of the layered nonlinear optical material 76 along an axis substantially parallel to the layers. The wavelength of the input light beam is in the transparency range of the nonlinear optical material 76. The input light beam is transmitted through the nonlinear optical material to a detector 82.

A control beam source 74 applies a variable intensity control light beam 81 along an axis that is substantially perpendicular to the layers of the nonlinear optical material 76. The control light beam 81 traverses the layers of the sandwich. The wavelength of the control light beam is within the absorption range of the nonlinear optical material. Absorbed light releases charge in the small energy band gap material. The charge is trapped therein.

As shown in FIG. 7, a spatial intensity distribution, taken across any diameter of the control light beam as it traverses the layered structure, is a function of distance from the center axis of the beam. Illustratively in FIG. 7, a Gaussian distribution, with its peak value positioned at center line $C_{L1}$ of the control light beam 81 in FIG. 1, is used for simplicity. Other distributions may also be used.

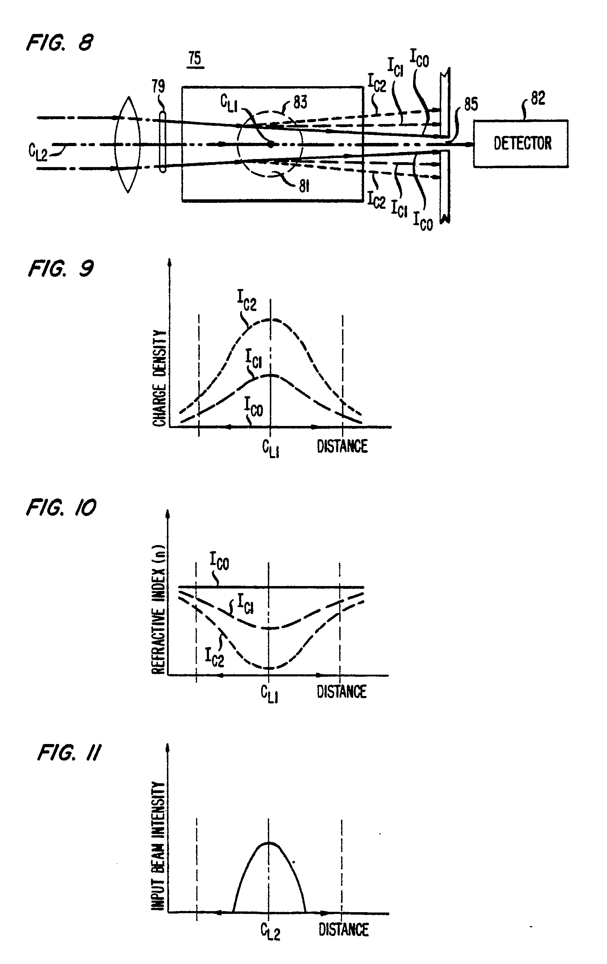

Referring now to FIGS. 8, 9, 10 and 11, operation of one species of the device 75 of FIG. 6 will be described. In the arrangement of FIG. 8 shown as a top view, the control light beam intersects the top surface of the device 75 in a circular cross section 83. The input light beam 79 is directed into the layered nonlinear optical material along an axis, or center line, $C_{L2}$ which intersects the center line $C_{L1}$ of the control light beam. Thus the input light beam cuts symmetrically through the zone of influence of the control light beam.

Any variation of the intensity of the control light beam 81 of FIG. 6 changes the optical response of the device 75. Changes of intensity of the control light beam cause variations of the quantity of charge trapped in the thin layers of the multiple quantum well structure. As the quantity of charge changes, it causes the dielectric constant, the absorption coefficient, and the refractive index to change. For instance increasing the intensity of the control light beam increases the charge and reduces the index of refraction of the multiple quantum well structure.

In FIG. 9, there are three different charge distribution functions which show variation of the quantity and the distribution of charge in the nonlinear material with the distance from the center line $C_{L1}$ of the control light beam. The charge distribution functions of FIG. 9, represent charge distribution across the diameter of the control light beam 81 of FIG. 8. For a control light beam of zero-intensity $I_{C0}$, there is no trapped charge. For an intermediate intensity $I_{C1}$ of control light beam, the charge is distributed in a Gaussian shape with its peak centered at the center line $C_{L1}$ of the control light beam. For a high intensity $I_{c2}$ of the control light beam, the Gaussian shaped charge distribution has a higher peak value.

In FIG. 10, there are shown three different refractive index profiles labelled $I_{c0}$, $I_{c1}$, and $I_{c2}$ which correlate, respectively, with the similarly designated charge distribution functions of FIG. 9. It should be noted that as intensity and charge increase, the associated refractive index decreases.

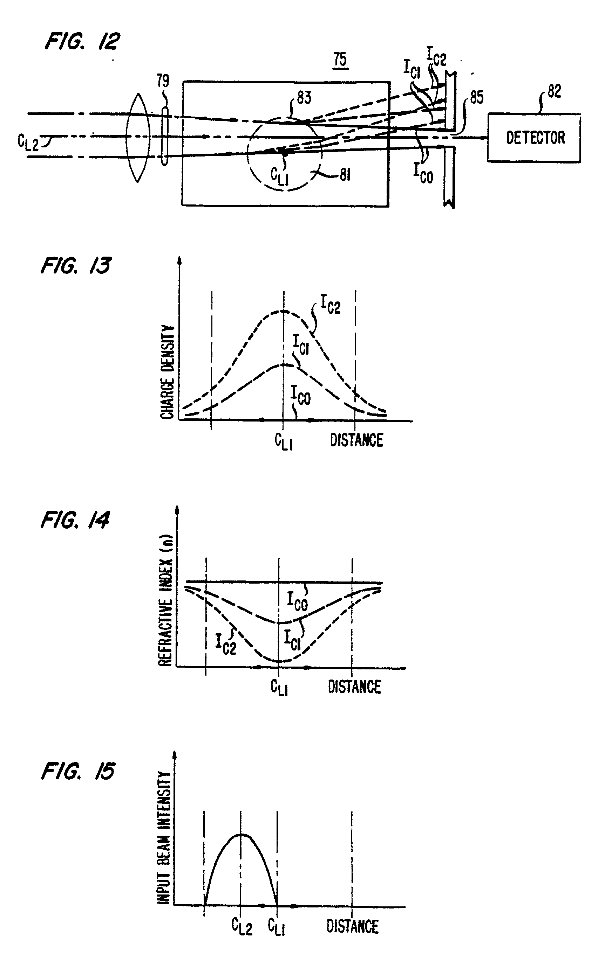

As shown in FIG. 11, the intensity of the input light beam 79 of FIG. 8 also has a nonuniform distribution. The distribution function is plotted with respect to distance from the center line $C_{L2}$ of the control light beam. As the input light beam with the intensity distribution of FIG. 11 traverses the zone of influence of the control light beam in FIG. 8, the input light beam 79 is influenced by one of the refractive index functions shown in FIG. 11 depending upon the intensity of the control light beam.

For zero-intensity $I_{c0}$ of the control beam 81, all portions of the input light beam are influenced by a uniform refractive index within the zone of influence of the control light beam. For the zero-intensity control beam condition, focusing of the input light beam 79 is unaffected by the control light beam, as shown by the exit beam path which is bounded by solid lines labelled $I_{c0}$ in FIG. 8.

For intermediate level intensity $I_{c1}$ of the control light beam 81, the input light beam 79 is influenced by the dashed refractive index function labelled $I_{c1}$ in FIG. 10. The input light beam is affected by the refractive index function. As a result, the exiting beam is defocused somewhat, as shown by the exit beam path which is bounded by the dashed lines labelled $I_{c1}$ in FIG. 8.

For high level intensity $I_{c2}$ of the control light beam 81, the input light beam 79 is influenced by a greater variation of the refractive index, as shown by a dotted line $I_{c2}$ in FIG. 10. The result is greater defocusing of the exiting beam, as shown by the exit beam path which is bounded by the dotted lines labelled $I_{c2}$ in FIG. 8.

Thus the detector 82 of FIG. 8 receives through an aperture 85 a relatively high intensity level of light when the control light beam has zero-intensity. As the control light beam intensity increases, the exiting beam spreads out more and more. The detector therefore receives light of less and less intensity as the control light beam increases in intensity. The operating characteristic curve 30 of FIG. 4 additionally represents the intensity of light received by the detector 82 in FIG. 8.

Referring now to FIGS. 12, 13, 14 and 15, operation of another species of the device 75 of FIG. 6 can be described. In the arrangement of FIG. 12 shown as a top view, the control light beam 81 intersects the top surface of the device 75 in a circular cross section similar to the arrangement of FIG. 8. In the arrangement of FIG. 12, however, the input light beam 79 is applied to the layered nonlinear optical material along an axis which intersects the control light beam off center. In fact all of or almost all of the input light beam 79 is on one side of the center line $C_{L1}$ of the control light beam, as shown by the input light beam intensity distribution curve of FIG. 15.

The intensity of the control light beam 81 changes the trapped charge in the nonlinear optical material similarly to the arrangement of FIG. 8. As a result there are variations in the dielectric constant, the absorption coefficient and the refractive index. In FIGS. 13 and 14, the changes of the quantity of charge and the refractive index are shown as functions of the distance from the center line $C_{L1}$ of the control light beam 81.

Because the input light beam is offset from the center line $C_{L1}$ of the control light beam 81, the input light beam may be subject to nonsymmetrically different refractive indices as it traverses the zone of influence of the control light beam. For zero-intensity of the control light beam, the focus of the input beam is not influenced by the control light beam. Instead, as shown in FIG. 12, the input light beam is transmitted through the device 75 and the aperture 85 to the detector 82. Outlines of the output beam are shown by solid lines labelled $I_{c0}$. As the intensity of the control light beam is increased, the corresponding dashed and dotted refractive index functions, labelled $I_{c1}$ and $I_{c2}$, cause the output light beam to bend successively greater amounts, as shown in FIG. 13 by similarly dashed and dotted outline paths, labelled $I_{c1}$ and $I_{c2}$, respectively.

Detector 82 receives a relatively high intensity of light when the control light beam is at zero-intensity or a low intensity. As the control light beam intensity increases, the intensity of light received by the detector decreases. The output intensity characteristic curve 30 of FIG. 4 is representative of the output light received by the detector 82 in the arrangement of FIG. 12.

Devices operating in accordance with the prior discussion can perform in a wide range of wavelengths. As previously described, devices fabricated in the mentioned material system, operate at wavelengths in a range of 0.7 - 0.9 micrometers for the control beam and at wavelengths greater than 0.85 micrometers in the transparency range of the nonlinear material for the input beam. With other material systems, such as $In_{1-x-y}Ga_xAl_yAs$ and $In_{1-x}Ga_xAs_{1-y}P_y$, devices can be fabricated for wavelengths in a range of 1.3 - 1.5 micrometers for the control beam and at wavelengths greater than 1.3 micrometers for the input beam. For wavelengths in between those ranges, the materials may be selected from either of the material systems.

In the illustrative embodiments only negative charge has been shown. It is noted that trapped positive charge also will provide useful devices. This trapped positive charge may be provided by optically energizing the layered material to release and trap the charge.

## Claims

1. An optical device comprising:
a layered semiconductor structure including an optically non-linear region (14,61,76);
means (20,64,78) for directing an input light beam (21,71,79), having a wavelength within the transparency range of the non-linear region, towards the non-linear region; and
means (16;65,74) for directing a control light beam (17,66,81), having a wavelength within the absorption range of the non-linear region, towards the non-linear region, thereby to control the propagation of the input beam;
CHARACTERISED IN THAT
the non-linear region is a multiple quantum well structure comprising alternate layers of a large-bandgap material (19) and a small-bandgap material (15,68), the small-bandgap layers being arranged for containing trapped charge.

2. A device as claimed in claim 1 including an interface (12) between the non-linear region (14) and a linear region (13) wherein the means (20) for directing the input beam (21) is arranged to direct the input beam at the interface at an angle θ which is above the critical angle for reflection when the intensity of the control beam is high, but below the critical angle when the intensity of the control beam is low.

3. A device as claimed in claim 1 wherein the non-linear region (61) forms an optical waveguide structure with optically linear cladding regions (62), the means (64) for directing the input beam (71) is arranged to direct the input beam into the waveguide structure and the application of a high-intensity control beam spoils the waveguiding capability of the waveguide structure causing the input beam to spread into the cladding regions.

4. A device as claimed in claim 1 wherein the means (78) for directing the input beam (79) is arranged to direct the input beam into the non-linear region (76) in a direction substantially parallel to the layers and wherein the means (74) for directing the control beam (81) is arranged to provide a non-uniform intensity distribution whereby refractive index changes due to the control beam are effective to refract the input beam.

5. A device as claimed in claim 4 wherein the said refractive index changes are effective to defocus the input beam.

6. A device as claimed in claim 4 wherein the said refractive index changes are effective to deflect the input beam.

## Revendications

1. Un dispositif optique comprenant :
une structure à semiconducteurs en couches, comprenant une région non linéaire au point de vue optique (14, 61, 76) ;
des moyens (20, 64, 78) pour diriger vers la région non linéaire un faisceau lumineux d'entrée (21, 71, 79) ayant une longueur d'onde comprise dans la plage de transparence de la région non linéaire ; et
des moyens (16, 65, 74) pour diriger vers la région non linéaire un faisceau lumineux de commande (17, 66, 81) ayant une longueur d'onde comprise dans la plage d'absorption de la région non linéaire, pour commander ainsi la propagation du faisceau d'entrée ;
CARACTERISE EN CE QUE
la région non linéaire est une structure à puits quantiques multiples comprenant des couches alternées d' un matériau à grande bande interdite(19) et d'un matériau à faible bande interdite (15, 68), les couches à faible bande interdite étant disposées de façon à contenir une charge emprisonnée.

2. Un dispositif selon la revendication 1, comprenant une interface (12) entre la région non linéaire (14) et une région linéaire (13), dans lequel les moyens (20) destinés à diriger le faisceau d'entrée (21) sont conçus pour diriger le faisceau d'entrée à l'interface sous un angle θ qui est supérieur à l'angle critique pour la réflexion lorsque l'intensité du faisceau de commande est élevée, mais qui est inférieur à l'angle critique lorsque l'intensité du faisceau de commande est faible.

3. Un dispositif selon la revendication 1, dans lequel la région non linéaire (61 ) forme une structure de guide d'ondes optique comportant des régions de gaine (62) linéaires au point de vue optique, les moyens (64) destinés à diriger le faisceau d'entrée (71) sont conçus pour diriger le faisceau d'entrée de façon qu'il pénètre dans la structure de guide d'ondes, et l'application d'un faisceau de commande d'intensité élevée dégrade la capacité de guidage d'ondes de la structure de guide d'ondes, ce qui fait que le faisceau d'entrée s'étale dans les régions de gaine.

4. Un dispositif selon la revendication 1, dans lequel les moyens (78) destinés à diriger le faisceau d'entrée (79) sont conçus de façon à diriger le faisceau d'entrée vers la région non linéaire (76) dans une direction pratiquement parallèle aux couches, et dans lequel les moyens (74) destinés à diriger le faisceau de commande (81) sont conçus de façon à produire une distribution d'intensité non uniforme, grâce à quoi des changements d'indice de réfraction sous l'effet du faisceau de commande provoquent une réfraction du faisceau d'entrée.

5. Un dispositif selon la revendication 4, dans lequel les changements d'indice de réfraction défocalisent le faisceau d'entrée.

6. Un dispositif selon la revendication 4, dans lequel les changements d'indice de réfraction dévient le faisceau d'entrée.

**Ansprüche**

1. Optisches Bauteil mit einer Halbleiterschichtstruktur einschließlich einer optisch nichtlinearen Zone (14, 61, 76),
einer Einrichtung (20, 64, 78) zum Ausrichten eines Eingangslichtstrahles (21, 71, 79) mit einer Wellenlänge im transparenten Bereich der nichtlinearen Zone auf dieselbe und einer Einrichtung (16, 65, 74) zum Ausrichten eines Steuerlichtstrahlsss (17, 66, 81) mit einer Wellenlänge im Absorptionsbereich der nichtlinearen Zone auf dieselbe, um dadurch die Ausbreitung des Eingangslichtstrahls zu steuern, dadurch gekennzeichnet, daß die nichtlineare Zone eine Mehrfachquantensenkenstruktur mit abwechselnden Schichten aus einem Material (19) mit großer Bandlücke und einem Material (15, 68) mit kleiner Bandlücke ist, wobei die Schichten mit kleiner Bandlücke zur Aufnahme eingefangener Ladung vorgesehen sind.

2. Bauteil nach Anspruch 1 mit Grenzfläche (12) zwischen der nichtlinearen Zone (14) und einer linearen Zone (13), wobei die Einrichtung (20) zum Ausrichten des Eingangslichtstrahls (21) so ausgelegt ist, daß sie den Eingangsstrahl unter einem Winkel $\theta$ auf die Grenzfläche richtet, der oberhalb des kritischen Winkels für die Reflexion liegt, wenn die Intensität des Steuerstrahls hoch ist, aber unterhalb des kritischen Winkels, wenn die Intensität des Steuerstrahls niedrig ist.

3. Bauteil nach Anspruch 1, bei dem die nichtlineare Zone (61) eine optische Wellenleiterstruktur mit optisch linearen Beschichtungszonen (62) bildet, die Einrichtung (64) zur Ausrichtung des Eingangsstrahls (71) so ausgelegt ist, daß sie den Eingangsstrahl in die Wellenleiterstruktur führt, und das Anlegen eines Steuerstrahls hoher Intensität die Wellenführungsfähigkeit der Wellenleiterstruktur vernichtet, wodurch der Eingangsstrahl sich in die Beschichtungszonen ausbreitet.

4. Bauteil nach Anspruch 1, bei dem die Einrichtung (78) zum Ausrichten des Eingangsstrahls (79) so ausgelegt ist, daß sie den Eingangsstrahl in die nichtlineare Zone (76) in einer Richtung im wesentlichen parallel zu den Schichten führt, und bei dem die Einrichtung (74) zum Ausrichten des Steuerstrahls (81) so ausgelegt ist, daß sie eine ungleichförmige Intensitätsverteilung liefert, wodurch Brechungindexänderungen aufgrund des Steuerstrahls eine Brechung des Eingangsstrahls bewirken.

5. Bauteil nach Anspruch 4, bei dem die Brechungsindexänderungen eine Defokussierung des Eingangsstrahls bewirken.

6. Bauteil nach Anspruch 4, bei dem die Brechungsindexänderungen eine Ablenkung des Eingangsstrahls bewirken.

*FIG. 1*

VARIABLE
CONTROL BEAM
SOURCE — 16

10

19

14

15

20

INPUT
LIGHT
SOURCE

21

17

θ

26

28

DETECTOR

12

13

23

29

DETECTOR

*FIG. 2*

CHARGE DENSITY

CONTROL BEAM INTENSITY

*FIG. 3*

REFRACTIVE INDEX (n)

CONTROL BEAM INTENSITY

*FIG. 4*

$I_I$ • CONSTANT

OUTPUT INTENSITY

30

34

$I_C$

CONTROL BEAM INTENSITY

FIG. 5

VARIABLE CONTROL BEAM SOURCE

65

60

66

64

INPUT LIGHT SOURCE

71

62
61
72
68
62

69

DETECTOR

FIG. 6

VARIABLE CONTROL BEAM SOURCE

74

75

81

78

INPUT LIGHT SOURCE

79

76

82

DETECTOR

77

$C_{LI}$

FIG. 7

CONTROL BEAM INTENSITY $I_c$

$C_{LI}$

DISTANCE

FIG. 8

FIG. 9

FIG. 10

FIG. II

*FIG. 12*

*FIG. 13*

*FIG. 14*

*FIG. 15*